# EUROPÄISCHE PATENTSCHRIFT

(11) **EP 0 975 157 B1**
(45) Veröffentlichungstag und Bekanntmachung des Hinweises auf die Patenterteilung: **05.03.2008**
(21) Anmeldenummer: 99114386.8
(22) Anmeldetag: 22.07.1999
(51) Int. Cl.: H04N 5/445

(54) **Fernsehempfänger mit Onscreen-Display**
Television receiver with onscreen display
Récepteur de télévision avec un affichage OSD

(30) Priorität: 24.07.1998 DE 19833309
(43) Veröffentlichungstag der Anmeldung: 26.01.2000
(73) Patentinhaber: Grundig Multimedia B.V., 1083 HJ Amsterdam (NL)
(72) Erfinder: Thoma, Heinrich, 90762 Fürth (DE)
(74) Vertreter: Pröll, Jürgen

(56) Entgegenhaltungen:
- WO-A-95/33338
- WO-A-97/10681
- WO-A-98/14003
- US-A- 5 233 423
- US-A- 5 499 018
- US-A- 5 612 715

## Beschreibung

Die Erfindung betrifft einen Fernsehempfänger mit den im Oberbegriff des Anspruchs 1 angegebenen Merkmalen.

Onscreen-Display-Generatoren, die in ein Fernsehgerät installiert sind, sind bereits bekannt und werden dazu verwendet, auf dem Bildschirm des Fernsehgerätes in alphanumerischer oder grafischer Form Informationen über den Zustand des Fernsehgerätes, Benutzerführungsinformationen und beispielsweise die aktuelle Uhrzeit anzuzeigen. Diese Anzeige kann entweder auf neutralem Hintergrund oder in Form einer Einblendung in ein Fernsehrundfunksignal erfolgen.

Aus der DE-C2-29 20 023 ist ein Verfahren zum Erzeugen von Anzeigen analoger Betriebsparameter eines Fernsehempfängers auf dessen Bildschirm bekannt. Bei diesem Verfahren wird eine Zeichenerzeugungseinrichtung derart gesteuert, daß sie ein Signal erzeugt, welches aus einer Folge einer ersten Anzahl von ersten Zeichen besteht, wobei die erste Anzahl von ersten Zeichen proportional dem Pegel des dem ersten Signal zugeordneten Betriebsparamaters ist, und aus einer Folge einer zweiten Anzahl von zweiten Zeilen besteht, wobei die Gesamtzahl der ersten und zweiten Zeichen dem maximalen Pegel des zugeordneten Betriebsparameters proportional ist.

Aus der EP-B1-0 219 703 ist ein weiterer Fernsehempfänger bekannt, der einen Onscreen-Display-Generator aufweist. Dieser Fernsehempfänger ist mit einem ersten elektronischen Speicher versehen, der zur Abspeicherung von sich auf die Abstimmung der Fernsehsignale beziehender Daten vorgesehen ist. Weiterhin weist der bekannte Fernsehempfänger eine Bedienungseinheit auf, mittels derer alphanumerische Zeichensätze generiert werden. Der Speicher dieses Empfängers ist weiterhin zur Abspeicherung einer Vielzahl von alphanumerischen Kennsätzen vorgesehen. In Antwort auf ein mittels der Bedienungseinheit eingegebenes Steuersignal liest die Steuereinheit aus dem ersten elektronischen Speicher sich auf die Abstimmung des Fernsehsignals beziehende Daten und zugehörige Kennsätze aus, die auf dem Bildschirm dargestellt werden.

Weiterhin ist aus der EP-B1-0 571 604 ein Fernsehempfänger bekannt, auf dessen Bildschirm eine Kanalkennzeichnung angezeigt wird. Dieser Fernsehempfänger weist Mittel für eine Benutzer-Eingabe, Speichermittel zur Speicherung von Daten und Steuermittel auf die mit den Speichermitteln verbunden sind, um Daten aus den Speichermitteln zu lesen und um die gespeicherten Daten in Abhängigkeit von der Benutzereingabe einem Fernsehkanal zuzuordnen. Bei diesen Daten handelt es sich um vorprogrammierte Kennzeichnungen, die nicht vom Benutzer der Vorrichtung eingegeben werden. Ferner sind im bekannten Fall Onscreen- und Grafik-Erzeugungsmittel vorgesehen, die mit den Steuermitteln verbunden sind, um Textzeichen und grafische Signale für die Anzeige zu erzeugen, wobei diese den gespeicherten Daten entsprechen.

Weiterhin sind bereits Fernsehempfänger bekannt, die eine Modulschnittstelle aufweisen. Diese ist dazu vorgesehen, in das Fernsehgerät im Sinne einer Nachrüstung ein Einbaumodul zu integrieren, bei dem es sich beispielsweise um ein Satellitensignalempfangsmodul handeln kann. Bei derartigen Geräten werden alle Texteinblendungen durch einen ohnehin vorhandenen Videotextbaustein erzeugt, welcher mit einem Zeichengenerator versehen ist.

Aus US 5,233,423 ist ein Fernsehgerät bekannt, welches mit einem Grafikgenerator ausgestattet ist. Dieser ist in der Lage einfache oder mehrfache Grafikbilder darzustellen, wobei diese Grafikbilder Werbedaten repräsentieren und die Daten in einem Speicher gespeichert sind.

Aus WO97/10681 A1 ist eine digitale Vorrichtung zur Wiedergabe eines komprimierten digitalen Videosignals bekannt, dass auf einem Aufzeichnungsmedium gespeichert ist. Die Vorrichtung enthält einen Decoder und eine Empfangseinheit. Im Weiteren weist die Empfangseinheit einen OSD-Generator auf.

Auch bei anderen bekannten Fernsehgeräten werden für Onscreen-Display-Einblendungen hochwertige RGB-Signale mittels des Videotextbausteins erzeugt und in die dem Bildsignal entsprechenden RGB-Signale eingeblendet.

Bei eigenständigen Satellitenempfängern sind oftmals nur einfache Onscreen-Display-Einblendungen vorgesehen. Diese werden dem FBAS-Signal hinzugefügt, haben nur einen Umfang von wenigen Zeilen und sind meistens Schwarz-Weiß-Einblendungen.

Bei Fernsehempfängern, die mit einer Modulschnittstelle ausgerüstet sind, können die Hardware-Vorleistungen des Geräteherstellers in Grenzen gehalten werden, da das ab Werk ausgelieferte Fernsehgerät ohne das Zusatzmodul ausgeliefert wird. Dieses Zusatzmodul wird nur von denjenigen Kunden, die dies wünschen, im Sinne einer Nachrüstung unter Verwendung der Modulschnittstelle in das Gerät eingebaut. Soll bei einem derartigen Fernsehgerät dafür Sorge getragen werden, daß auch bezüglich eines nachgerüsteten Zusatzmoduls eine Onscreen-Display-Benutzerführung möglich ist, dann würde dies die Verwendung von Rechnern größerer Kapazität und erhebliche Software-Vorleistungen erfordern. Diese Vorleistungen können im Bereich der Unterhaltungselektronik aus Kostengründen nicht erbracht werden, wenn das Gerät am Markt konkurrenzfähig bleiben soll.

Eine alternative Lösungsmöglichkeit für die vorstehend beschriebenen Probleme besteht darin, bei einer Nachrüstung des Fernsehgerätes mit einem Zusatzmodul den Hauptrechner des Fernsehgerätes durch einen Rechner mit erweiterter, an das Zusatzmodul angepaßter Software zu ersetzen. Dieses Vorgehen ist jedoch umständlich.

Ausgehend von diesem Stand der Technik liegt der Erfindung die Aufgabe zugrunde, einen Fernsehempfänger mit den im Oberbegriff des Anspruchs 1 angegebenen Merkmalen derart auszugestalten, daß die vorstehend beschriebenen Nachteile nicht auftreten.

Diese Aufgabe wird durch einen Fernsehempfänger mit den im Anspruch 1 angegebenen Merkmalen gelöst. Vorteilhafte Ausgestaltungen und Weiterbildungen der Erfindung ergeben sich aus den abhängigen Ansprüchen. Im Anspruch 15 ist ein Satellitensignalempfangsmodul angegeben, welches unter Verwendung einer Modulschnittstelle eines Fernsehempfängers in diesen eingebaut werden kann.

Die Vorteile der Erfindung bestehen insbesondere darin, daß es bei einer Nachrüstung eines Fernsehers mit einem Nachrüstmodul nicht notwendig ist, den Hauptrechner des Fernsehgerätes auszutauschen. Weiterhin müssen gemäß der Erfindung nicht alle Komponenten des Fernsehgerätes mittels eines einzigen Rechners verwaltet werden. Dies erlaubt es, die einzelnen Module oder Komponenten völlig unabhängig voneinander zu pflegen und weiterzuentwickeln. Es muß lediglich darauf geachtet werden, daß das jeweilige Zusatzmodul unter Verwendung der vorhandenen, eine einfache und universelle Hardwareschnittstelle bildenden Modulschnittstelle in das Fernsehgerät eingesetzt werden kann.

Durch die Merkmale des Anspruchs 2 wird erreicht, daß der zweite Onscreen-Display-Generator nach einer Freigabe durch den ersten Mikrocomputer nahezu völlig unabhängig von den weiteren Gerätekomponenten arbeiten kann, um im zweiten Onscreen-Display-Generator erzeugte Benutzerführungsinformationen auf dem Bildschirm darstellen zu können.

Durch die im Anspruch 3 angegebene Synchronisierung der beiden Onscreen-Display-Generatoren wird unter anderem erreicht, daß auch - wie im Anspruch 9 angegeben ist - eine überlagerte Bildschirmdarstellung von Signalen erfolgen kann, die von verschiedenen Onscreen-Display-Generatoren abgeleitet sind.

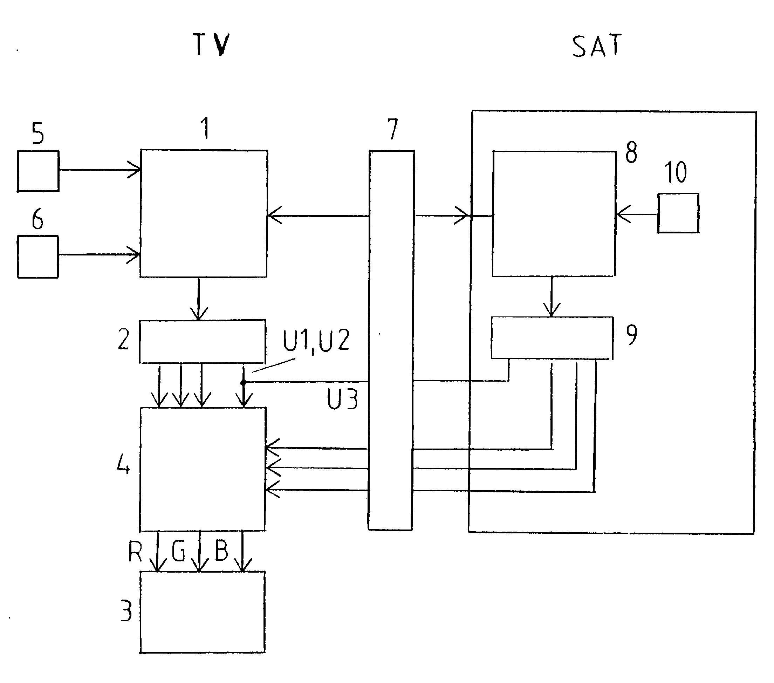

Weitere vorteilhafte Eigenschaften der Erfindung ergeben sich aus der Erläuterung eines Ausführungsbeispiels für die Erfindung anhand der Figur.

Diese zeigt in Form eines Blockschaltbildes die zum Verständnis der Erfindung wesentlichen Baugruppen eines Fernsehempfängers TV, welcher im Sinne einer Nachrüstung mit einem Satellitensignalempfangsmodul SAT versehen wurde.

Der gezeigte Fernsehempfänger weist einen ersten Mikrocomputer 1 auf, der als Hauptsteuereinheit für den Fernsehempfänger dient. Der erste Mikrocomputer 1 ist zur Ansteuerung eines ersten Onscreen-Display-Generators 2 vorgesehen, welcher zur Erzeugung von Text- und/oder Grafiksignalen dient, die auf dem Bildschirm 3 des Fernsehempfängers darstellbar sind. Bei diesem ersten Onscreen-Display-Generator 2 kann es sich um einen in den Videotextbaustein des Fernsehgerätes integrierten Generator handeln, der auch zur Erzeugung von auf dem Bildschirm darstellbaren Videotextsignalen dient. Am Ausgang dieses Bausteins 2 liegen RGB-Signale vor, die dem Bildschirm 3 über einen Umschalter 4 zugeführt werden. Gegebenenfalls können auf dem Signalweg zwischen dem ersten Onscreen-Display-Generator 2 und dem Bildschirm 3 weitere (nicht gezeichnete) Signalverarbeitungsschaltungen vorgesehen sein, mittels derer beispielsweise eine Veränderung der Helligkeit und des Kontrastes der Signale durchgeführt werden kann.

Die Synchronisierung der Bildschirmdarstellung erfolgt entweder unter Verwendung eines Synchronsignals, weiches mittels einer Synchronsignalabtrennstufe 5 aus einem übertragenen Fernsehsignal abgetrennt wurde, oder unter Verwendung eines in einem freilaufenden Oszillator 6 erzeugten Taktsignals.

Der gezeigte Fernsehempfänger ist weiterhin mit einer Modulschnittstelle 7 versehen, bei der es sich um eine einfache und universelle Hardwareschnittstelle handelt, die zur Aufnahme eines Zusatz- oder Einbaumoduls vorgesehen ist. Vorzugsweise handelt es sich bei diesem Einbaumodul um ein Satellitensignalempfangsmodul SAT. Dies ist ohne Verwendung von Spezialwerkzeug durch ein einfaches Einstecken in die Modulschnittstelle 7 in das Fernsehgerät integrierbar.

Das Einbaumodul SAT weist einen zweiten Mikrocomputer 8 als Steuereinheit auf. Dieser zweite Mikrocomputer 8 weist einen Programmspeicher auf, in welchem Softwareprogramme abgespeichert sind, die zur Realisierung eines Benutzerführungsdialoges und einer Text-/Grafik-Darstellung bezüglich des Satellitensignalempfangsmoduls SAT benötigt werden. Der zweite Mikrocomputer 8 ist zur Ansteuerung eines zweiten Onscreen-Display-Generators 9 vorgesehen, der die für die Benutzerführungsinformationen und die Text-/Grafik-Darstellung benötigten RGB-Signale erzeugt. Diese werden dann über den Umschalter 4 dem Display 3 zugeführt.

Der gezeigte Fernsehempfänger ist in mehreren verschiedenen Betriebsarten betreibbar.

In einer ersten Betriebsart werden lediglich Onscreen-Display-Daten auf dem Bildschirm 3 dargestellt, die vom Ausgang des Onscreen-Display-Generators 2 abgeleitet sind. Die zur Durchführung dieser Betriebsart notwendige Steuerung des Umschalters 4 erfolgt durch den ersten Mikrocomputer 1, der dem Umschalter 4 über den Onscreen-Display-Generator 2 ein Umschaltsignal U 1 zuführt, aufgrund dessen der Umschalter 4 für die Dauer dieser Darstellung in eine Schaltstellung gebracht wird, in der er für die Ausgangssignale des Onscreen-Display-Generators 2 durchlässig ist.

In einer zweiten Betriebsart werden lediglich Onscreen-Display-Daten auf dem Bildschirm dargestellt, die vom Ausgang des Onscreen-Display-Generators 9 abgeleitet sind. Die zur Durchführung dieser Betriebsart notwendige Steuerung des Umschalters erfolgt durch den ersten Mikrocomputer 1, der dem Umschalter 4 über den Onscreen-Display-Generator 2 ein Umschaltsignal U2 zuführt, aufgrund dessen der Umschalter 4 für die Dauer dieser Darstellung in eine Schaltstellung gebracht wird, in der er für die Ausgangssignale des Onscreen-Display-Generators 9 durchlässig ist. Weiterhin führt in dieser zweiten Betriebsart der erste Mikrocomputer 1 dem zweiten Mikrocomputer 8 ein Freigabesignal zu, aufgrund dessen die einbaumodulseitige Generierung von Onscreen-Display-Daten in die Wege geleitet wird.

Alternativ dazu kann in der zweiten Betriebsart die Steuerung des Umschalters 4 auch durch den zweiten Mikrocomputer erfolgen, der dem Umschalter 4 über den Onscreen-Display-Generator 9 ein Umschaltsignal U3 zuführt, aufgrund dessen der Umschalter 4 für die Dauer dieser Darstellung in die für das Ausgangssignal des Onscreen-Display-Generators 9 durchlässige Schalterstellung gebracht wird.

Die Synchronisierung der Bildschirmdarstellung in dieser zweiten Betriebsart kann unter Verwendung von Synchron- bzw. Taktsignalen erfolgen, die dem zweiten Mikroprozessor 8 über die Schnittstelle 7 vom ersten Mikrocomputer 1 aus zugeführt werden. In diesem Fall erfolgt die Bildschirmdarstellung der Ausgangssignale des zweiten Onscreen-Display-Generators 9 synchron mit dem im ersten Mikrocomputer vorliegenden Takt.

Die Synchronisierung der Bildschirmdarstellung in dieser zweiten Betriebsart kann alternativ dazu auch unter Verwendung von Taktsignalen erfolgen, die dem zweiten Mikrocomputer 8 von einem zweiten freilaufenden Oszillator 10 zugeführt werden. In diesem Fall arbeitet der zweite Onscreen-Display-Generator völlig unabhängig vom und asynchron zum Takt, der im ersten Mikrocomputer vorliegt.

In einer dritten Betriebsart werden sowohl Signale aus dem ersten Onscreen-Display-Generator 2 als auch Signale aus dem zweiten Onscreen-Display-Generator 9 auf dem Bildschirm dargestellt, wobei die Umschaltung zwischen diesen Signalen pixelweise erfolgt. In dieser Betriebsart arbeiten die beiden Onscreen-Display-Generatoren 2 und 9 synchron, was durch einen Austausch von Synchronsignalen bzw. Taktsignalen zwischen den beiden Mikrocomputern 1 und 8 sichergestellt wird. Die Steuerung des Umschalters 4 kann in diesem Fall entweder vom ersten Mikrocomputer 1 über den Onscreen-Display-Generator 2 oder vom zweiten Mikrocomputer 8 über den Onscreen-Display-Generator 9 erfolgen.

Beim vorstehend beschriebenen Ausführungsbeispiel erfolgt im Umschalter 4 eine Umschaltung zwischen RGB-Signalen. Alternativ dazu ist es auch möglich, eine Umschaltung von FBAS-Signalen oder zwischen digitalen Datenströmen vorzunehmen.

Mittels der Erfindung wird nach alledem ein Weg aufgezeigt, wie in einfacher und schneller Weise ein Einbaumodul in einen mit einer Modulschnittstelle versehenen Fernsehempfänger integriert werden kann, wobei es sich bei dem Einbaumodul auch um ein völlig unabhängig vom Fernsehempfänger entwickeltes Modul handeln kann. Es muß lediglich dafür gesorgt sein, daß das Modul die zum Datenaustausch mit dem Fernsehgerät notwendigen Anschlüsse aufweist.

Die Darstellung der Text- bzw. Grafiksignale auf dem Bildschirm kann entweder vor neutralem Hintergrund oder als Einblendung in ein Fernsehrundfunksignal erfolgen.

## Patentansprüche

1. Fernsehempfänger, mit
einem ersten Mikrocomputer (1) als Hauptsteuereinheit für den Fernsehempfänger,
einem ersten Onscreen-Display-Generator (2) zur Erzeugung von Text-und/oder Grafiksignalen, die zur Darstellung auf einem Bildschirm (3) des Fernsehempfängers vorgesehen sind,
einer Modulschnittstelle (7), welche zur Integration eines Zusatzgerätes in den Fernsehempfänger vorgesehen ist, und
einem über die Modulschnittstelle (7) in den Fernsehempfänger integrierten Einbaumodul (SAT),
**dadurch gekennzeichnet, dass**
das Einbaumodul (SAT) einen zweiten Mikrocomputer (8) als Steuereinheit aufweist,
das Einbaumodul (SAT) einen zweiten Onscreen-Display-Generator (9) zur Erzeugung von Text- und/oder Grafiksignalen aufweist, die zur Darstellung auf dem Bildschirm (3) des Fernsehempfängers vorgesehen sind, -
der erste Mikrocomputer (1) mit dem zweiten Mikrocomputer (8) über die Modulschnittstelle (7) verbunden ist, und -
im Fernsehempfänger ein Umschalter (4) vorgesehen ist, dem eingangsseitig vom ersten Onscreen-Display-Generator (2) abgeleitete Signale und vom zweiten Onscreen-Display-Generator (9) abgeleitete Signale sowie ein Schaltsignal (U1, U2, U3) zur Umschaltung zwischen diesen beiden Signalen zugeführt werden.

2. Fernsehempfänger nach Anspruch 1,
**dadurch gekennzeichnet, dass**
der erste Onscreen-Display-Generator (2) und der zweite Onscreen-Display-Generator (9) asynchron zueinander arbeiten.

3. Fernsehempfänger nach Anspruch 1,
**dadurch gekennzeichnet, dass**
der erste Onscreen-Display-Generator (2) und der zweite Onscreen-Display-Generator (9) miteinander synchronisiert sind.

4. Fernsehempfänger nach Anspruch 3,
**dadurch gekennzeichnet dass**
die beiden Mikrocomputer (1, 8) über einen Steuerbus miteinander verbunden sind und der Steuerbus zur Übertragung von Synchronsignalen zwischen den beiden Mikrocomputern (1, 8) vorgesehen ist.

5. Fernsehempfänger nach Anspruch 4,
**dadurch gekennzeichnet dass**
die Synchronsignale mittels einer Synchronsignalabtrennschaltung (5) aus einem Fernsehsignal abgeleitet sind.

6. Fernsehempfänger nach Anspruch 4,
**dadurch gekennzeichnet, dass**
die Synchronsignale von einem Taktoszillator (6, 10) abgeleitet sind, welcher im Fernsehempfänger oder im Einbaumodul (SAT) positioniert ist.

7. Fernsehempfänger nach einem der vorhergehenden Ansprüche,
**dadurch gekennzeichnet, dass**
das Schaltsignal im ersten Mikrocomputer (1) erzeugt wird.

8. Fernsehempfänger nach einem der vorhergehenden Ansprüche 1 bis 6,
**dadurch gekennzeichnet, dass**
das Schaltsignal im zweiten Mikrocomputer (8) erzeugt wird.

9. Fernsehempfänger nach einem der vorhergehenden Ansprüche,
**dadurch gekennzeichnet, dass**
die Umschaltung zwischen den vom ersten Onscreen-Display-Generator (2) abgeleiteten Signalen und den vom zweiten Onscreen-Display-Generator (9) abgeleiteten Signalen pixelweise erfolgt, so dass auf dem Bildschirm (3) des Fernsehempfängers eine überlagerte Darstellung von aus beiden Onscreen-Display-Generatoren (2, 9) abgeleiteten Signalen erfolgt.

10. Fernsehempfänger nach einem der vorhergehenden Ansprüche,
**dadurch gekennzeichnet, dass**
die dem Umschalter (4) eingangsseitig zugeführten Signale RGB-Signale sind.

11. Fernsehempfänger nach einem der vorhergehenden Ansprüche 1-9,
**dadurch gekennzeichnet, dass**
die dem Umschalter eingangsseitig zugeführten Signale FBAS-Signale sind.

12. Fernsehempfänger nach einem der vorhergehenden Ansprüche 1-9,
**dadurch gekennzeichnet, dass**
die dem Umschalter (4) eingangsseitig zugeführten Signale digitale Datenströme sind.

13. Fernsehempfänger nach einem der vorhergehenden Ansprüche,
**dadurch gekennzeichnet, dass**
das Einbaumodul (SAT) ein Satellitensignalempfangsmodul ist.

14. Fernsehempfänger nach einem der vorhergehenden Ansprüche,
**dadurch gekennzeichnet, dass**
er in drei Betriebsarten betreibbar ist, wobei in einer ersten Betriebsart eine Bildschirmdarstellung von aus dem ersten Onscreen-Display-Generator (2) abgeleiteten Signalen, in einer zweiten Betriebsart eine Bildschirmdarstellung von aus dem zweiten Onscreen-Display-Generator (9) abgeleiteten Signalen und in einer dritten Betriebsart eine überlagerte Bildschirmdarstellung von sowohl aus dem ersten (2) als auch aus dem zweiten (9) Onscreen-Display-Generator abgeleiteten Signalen erfolgt.

## Claims

1. Television receiver, comprising
a first microcomputer (1), as a main control unit for the television receiver,
a first onscreen-display generator (2), for the generation of text signals and/or graphic signals intended for representation on a display screen (3) of the television receiver,
a module interface (7), provided for the integration of an accessory device into the television receiver, and
a built-in module (SAT) integrated into the television receiver via the module interface (7),
**characterized in that**
the built-in module (SAT) has a second microcomputer (8), as a control unit,
the built-in module (SAT) has a second onscreen-display generator (9), for the generation of text signals and/or graphic signals intended for representation on the display screen (3) of the television receiver,
the first microcomputer (1) is connected to the second microcomputer (8) via the module interface (7), and in the television receiver there is provided a changeover switch (4) supplied, on the input side, with signals derived from the first onscreen-display generator (2) and signals derived from the second onscreen-display generator (9) and with a switching signal (U1, U2, U3) for switchover between these two signals.

2. Television receiver according to Claim 1,
**characterized in that**
the first onscreen-display generator (2) and the second onscreen-display generator (9) operate asynchronously relative to each other.

3. Television receiver according to Claim 1,
**characterized in that**
the first onscreen-display generator (2) and the second onscreen-display generator (9) are synchronized with each other.

4. Television receiver according to Claim 3,
**characterized in that**
the two microcomputers (1, 8) are connected to each other via a control bus, and the control bus is provided for the transmission of synchronization signals between the two microcomputers (1,8).

5. Television receiver according to Claim 4,
**characterized in that**
the synchronization signals are derived from a television signal by means of a synchronization-signal separation circuit (5).

6. Television receiver according to Claim 4,
**characterized in that**
the synchronization signals are derived from a clock-pulse oscillator (6, 10) positioned in the television receiver or in the built-in module (SAT).

7. Television receiver according to any one of the preceding claims,
**characterized in that**
the switching signal is generated in the first microcomputer (1).

8. Television receiver according to any one of the preceding Claims 1 to 6,
**characterized in that**
the switching signal is generated in the second microcomputer (8).

9. Television receiver according to any one of the preceding claims,
**characterized in that**
the switchover between the signals derived from the first onscreen-display generator (2) and the signals derived from the second onscreen-display generator (9) is effected pixel-wise, such that a superimposed representation of signals derived from both onscreen-display generators (2, 9) is effected on the display screen (3) of the television receiver.

10. Television receiver according to any one of the preceding claims,
**characterized in that**
the signals supplied to the input side of the changeover switch (4) are RGB signals.

11. Television receiver according to any one of the preceding Claims 1-9,
**characterized in that**
the signals supplied to the input side of the changeover switch are composite colour picture signals.

12. Television receiver according to any one of the preceding Claims 1-9,
**characterized in that**
the signals supplied to the input side of the changeover switch (4) are digital data streams.

13. Television receiver according to any one of the preceding claims,
**characterized in that**
the built-in module (SAT) is a satellite-signal receiver module.

14. Television receiver according to any one of the preceding claims,
**characterized in that**
it can be operated in three operating modes, wherein, in a first operating mode, there is effected a display screen representation of signals derived from the first onscreen-display generator (2); in a second operating mode, there is effected a display screen representation of signals derived from the second onscreen-display generator (9) and, in a third operating mode, there is effected a superimposed display screen representation of signals derived from both the first (2) and the second (9) onscreen-display generator.

## Revendications

1. Téléviseur, comportant
un premier micro-ordinateur (1) comme unité de commande principale pour le téléviseur,
un premier générateur OSD (2) pour générer des signaux de texte et/ou graphiques, qui sont prévus pour un affichage sur un écran (3) du téléviseur,
une interface de module (7), qui est prévue pour l'intégration d'un appareil supplémentaire dans le téléviseur, et
un module intégré (SAT) intégré dans le téléviseur par l'intermédiaire de l'interface de module (7),
**caractérisé en ce que**
le module intégré (SAT) présente un second micro-ordinateur (8) comme unité de commande,
le module intégré (SAT) présente un second générateur OSD (9) pour générer des signaux de texte et/ou graphiques, qui sont prévus pour l'affichage sur l'écran (3) du téléviseur,
le premier micro-ordinateur (1) est relié au second micro-ordinateur (8) par l'intermédiaire de l'interface de module (7), et
dans le téléviseur est prévu un commutateur (4), auquel des signaux provenant du premier générateur OSD (2) et des signaux provenant du second générateur OSD (9) ainsi qu'un signal de commutation (U1, U2, U3) sont délivrés unilatéralement pour une commutation entre ces deux signaux.

2. Téléviseur selon la revendication 1, **caractérisé en ce que** le premier générateur OSD (2) et le second générateur OSD (9) fonctionnent de manière asynchrone l'un par rapport à l'autre.

3. Téléviseur selon la revendication 1, **caractérisé en ce que** le premier générateur OSD (2) et le second générateur OSD (9) sont synchronisés l'un avec l'autre.

4. Téléviseur selon la revendication 3, **caractérisé en ce que** les deux micro-ordinateurs (1, 8) sont reliés l'un à l'autre par l'intermédiaire d'un bus de commande et le bus de commande est prévu pour la transmission de signaux synchrones entre les deux micro-ordinateurs (1, 8).

5. Téléviseur selon la revendication 4, **caractérisé en ce que** les signaux synchrones sont dérivés d'un signal de télévision au moyen d'un circuit de séparation de signaux synchrones (5).

6. Téléviseur selon la revendication 4, **caractérisé en ce que** les signaux synchrones sont dérivés par un oscillateur d'horloge (6, 10), qui est positionné dans le téléviseur ou dans le module intégré (SAT).

7. Téléviseur selon l'une des revendications précédentes, **caractérisé en ce que** le signal de commutation est généré dans le premier micro-ordinateur (1).

8. Téléviseur selon l'une des revendications précédentes 1 à 6, **caractérisé en ce que** le signal de commutation est généré dans le second micro-ordinateur (8).

9. Téléviseur selon l'une des revendications précédentes, **caractérisé en ce que** la commutation entre les signaux provenant du premier générateur OSD (2) et les signaux provenant du second générateur OSD (9) s'effectue au niveau du pixel, de sorte qu'un affichage combiné des signaux provenant des deux générateurs OSD (2, 9) est effectué sur l'écran (3) du téléviseur.

10. Téléviseur selon l'une des revendications précédentes, **caractérisé en ce que** des signaux délivrés unilatéralement au commutateur (4) sont des signaux RVB.

11. Téléviseur selon l'une des revendications précédentes 1-9, **caractérisé en ce que** les signaux délivrés unilatéralement au commutateur sont des signaux FBAS.

12. Téléviseur selon l'une des revendications précédentes 1-9, **caractérisé en ce que** les signaux délivrés unilatéralement au commutateur (4) sont des flux de données numériques.

13. Téléviseur selon l'une des revendications précédentes, **caractérisé en ce que** le module intégré (SAT) est un module de réception de signaux par satellite.

14. Téléviseur selon l'une des revendications précédentes, **caractérisé en ce qu'**il peut fonctionner selon trois modes de fonctionnement, où, dans le premier mode de fonctionnement est effectué un affichage sur écran des signaux provenant du premier générateur OSD (2), dans un second mode de fonctionnement est effectué un affichage sur écran des signaux provenant du second générateur OSD (9) et dans un troisième mode de fonctionnement est effectué un affichage sur écran combiné des signaux provenant non seulement du premier (2) mais également du second (9) générateur OSD.
